(19) Europäisches Patentamt
European Patent Office
Office européen des brevets

(11) EP 4 327 708 A1

(12) **EUROPEAN PATENT APPLICATION**

(43) Date of publication:
28.02.2024 Bulletin 2024/09

(21) Application number: 22200135.6

(22) Date of filing: 06.10.2022

(51) International Patent Classification (IPC):
*A47J 43/07* *(2006.01)*    *A47J 43/10* *(2006.01)*

(52) Cooperative Patent Classification (CPC):
A47J 43/0711; A47J 43/1043; A47J 43/1081

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.08.2022 PCT/CN2022/114953

(71) Applicant: Versuni Holding B.V.
5656 AE Eindhoven (NL)

(72) Inventors:
• CHENG, Guojun
5656 AE Eindhoven (NL)
• XU, XiaoMing
5656 AE Eindhoven (NL)
• CUARESMA, Samuel Jr Agustin
5656 AE Eindhoven (NL)

(74) Representative: Vollering, Stefanus Franciscus
Maria
Versuni Holding B.V.
High Tech Campus 42
5656 AE Eindhoven (NL)

(54) **HANDHELD KITCHEN APPLIANCE WITH ERGONOMIC TOOL EJECTION**

(57)    Provided is a handheld kitchen appliance (100) comprising a tool coupling (102) configured to releasably engage at least one food processing tool (104A, 104B), and a motorized drive system (105A, 105B) for driving rotation of the at least one engaged food processing tool. The handheld kitchen appliance further includes an ejector (106) for urging release of the at least one food processing tool from the tool coupling, and an actuator (108) that is movable by a user-applied force. A link member (110) has a first coupling portion (112) for coupling to the actuator, and a second coupling portion (114) spaced apart from the first coupling portion. The link member is pivotally mounted between the first and second coupling portions such that the user-applied force causes a pivoting motion of the link member. A cam assembly (116) couples the ejector and the link member to each other at the second coupling portion. The cam assembly is configured to transform the pivoting motion of the link member to a linear motion of the ejector that urges release of the at least one food processing tool from the tool coupling.

FIG. 2

EP 4 327 708 A1

## Description

FIELD OF THE INVENTION

This invention relates to a handheld kitchen appliance having a tool coupling configured to releasably engage at least one food processing tool, a motorized drive system for driving rotation of the at least one engaged food processing tool, and an ejector for urging release of the at least one food processing tool from the tool coupling.

BACKGROUND OF THE INVENTION

Various types of handheld kitchen appliances are known, such a food mixers. The food processing tool(s), for example beaters, whisks or dough hooks in the case of food mixers, tend to be detachable from the handheld kitchen appliance's motorized drive system in order to facilitate cleaning of the food processing tool(s) and/or to enable attachment of a different type of food processing tool.

In order to detach the food processing tool(s), the handheld kitchen appliance can include a tool release mechanism that urges release of the food processing tool(s) when an ejector button is pressed. However, positioning of the ejector button in an ergonomic manner can be challenging, particularly in view of spatial and geometric constraints imposed by other components, such as the motorized drive system, included in the handheld kitchen appliance.

SUMMARY OF THE INVENTION

The invention is defined by the claims.
According to examples in accordance with an aspect of the invention, there is provided a handheld kitchen appliance comprising: a tool coupling configured to releasably engage at least one food processing tool; a motorized drive system for driving rotation of the at least one engaged food processing tool; an ejector for urging release of the at least one food processing tool from the tool coupling; an actuator that is movable by a user-applied force; a link member having a first coupling portion for coupling to the actuator, and a second coupling portion spaced apart from the first coupling portion, the link member being pivotally mounted between the first and second coupling portions such that the user-applied force causes a pivoting motion of the link member; and a cam assembly for coupling the ejector and the link member to each other at the second coupling portion, the cam assembly being configured to transform the pivoting motion of the link member to a linear motion of the ejector that urges release of the at least one food processing tool from the tool coupling.

The pivotably mounted link member can act like a lever in order to transfer the user's movement of the actuator to the ejector via the cam assembly. The spacing between the first coupling portion at which the actuator couples, e.g. is attached, to the link member and the second coupling portion at which the cam assembly is coupled to the link member can provide flexibility in terms of where in the handheld kitchen appliance the actuator is positioned.

The link member can, for example, enable the actuator to be arranged proximal to or at the handheld kitchen appliance's handle, thereby making the handheld kitchen device's food processing tool(s)-ejection functionality more ergonomic.

The cam assembly further facilitates ejection of the food processing tool(s) by providing flexibility in terms of the direction and/or degree of movement of the actuator that causes the ejector to urge release of the food processing tool(s) from the tool coupling.

In some embodiments, the link member and the cam assembly are configured such that the linear motion of the ejector has a longer travel than the movement of the actuator causing the pivoting motion of the link member.

In other words, a relatively small actuator stroke results in a larger movement of the ejector to urge release of the food processing tool(s). Thus, the link member and the cam assembly can assist to make ejection of the food processing tool(s) easier for the user to implement via movement of the actuator.

Alternatively or additionally, the link member and the cam assembly may be configured such that the actuator is movable by the user-applied force in the same direction as the resultant linear motion of the ejector that urges release of the at least one food processing tool from the tool coupling.

The user-applied force being in the same direction as the linear motion of the ejector that urges release of the food processing tool(s) can assist to make implementing the ejection more intuitive for the user.

In at least some embodiments, the handheld kitchen appliance comprises a handle for permitting a user to grasp the handheld kitchen appliance.

In such embodiments, the first coupling portion may be arranged at or proximal to the handle, with the second coupling portion being correspondingly arranged distal with respect to the handle. This can enable the actuator to be arranged proximal to or at the handle, thereby making the food processing tool(s)-ejection functionality of the handheld kitchen device more ergonomic.

For example, the placement of the actuator may be such that the user can move the actuator with the same hand that is grasping the handle.

This may be more ergonomic, and hence more desirable from the consumer's point of view, than, for instance, a design in which the spatial separation of the actuator and the handle is such that two-handed operation is required, with one hand holding the handle and the other hand moving the actuator.

In some embodiments, the handheld kitchen appliance comprises a user-facing exterior surface that faces away from the engaged at least one food processing tool, with at least a portion of the actuator being arranged at or protruding from the user-facing surface and being pushable, by the user-applied force, towards the engaged at least one food processing tool.

Such arrangement of the actuator at or protruding from the user-facing surface can facilitate ejection of the food processing tool(s) whilst also assisting to avoid unintentional ejection, for example while the food processing tool(s) is or are being rotated by the motorized drive system.

In some embodiments, the link member is pivotably mounted midway between the first coupling portion and the second coupling portion.

Such mounting of the link member midway between the first coupling portion and the second coupling portion may facilitate control over the length of travel of the linear motion of the ejector relative to the movement of the actuator causing the pivoting motion of the link member.

In at least some embodiments, the link member is pivotably mounted at a fixed position in the handheld kitchen appliance. Thus, the only permitted movement of the link member is the pivoting caused by the movement of the actuator.

In some embodiments, the cam assembly comprises a cam gear for engaging the second coupling portion

In such embodiments, the cam gear may be rotatably mounted at a fixed position in the handheld kitchen appliance to define a first axis of rotation, and rotatably coupled to the ejector to define a second axis of rotation extending parallel to the first axis of rotation.

A first distance between the first axis of rotation and an interface between the second coupling portion and the cam gear may be shorter than a second distance between the first axis of rotation and the second axis of rotation. Making the first distance shorter than the second distance may facilitate a longer length of travel of the linear motion than the movement of the actuator causing the pivoting motion of the link member, in other words a relatively small actuator stroke resulting in a larger movement of the ejector to urge release of the food processing tool(s).

In some embodiments, the link member extends at least partly around the motorized drive system. This may assist to make the design of the handheld kitchen appliance more compact.

For example, the link member may comprise a ring that extends around the motorized drive system.

In at least some embodiments, the direction of the linear motion of the ejector that urges release of the at least one food processing tool from the tool coupling is parallel to an axis of rotation of the at least one food processing tool when driven by the motorized drive system.

In some embodiments, the actuator comprises a button portion contactable by the user and a rod portion extending from the button portion to the first coupling portion of the link member.

The handheld kitchen appliance may comprise the at least one food processing tool. Alternatively, the handheld kitchen appliance may be provided, e.g. supplied, to the user separately from the food processing tool(s).

The handheld kitchen appliance can be any type of handheld kitchen appliance. However, particular mention is made of the handheld kitchen appliance being a food mixer, due to the above-described advantages of the link member-cam assembly arrangement in facilitating ejection of the food processing tool(s), e.g. beater(s), whisk(s) or dough hook(s), from the tool coupling of such a food mixer.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

FIG. 1 depicts a handheld kitchen appliance according to an example;
FIG. 2 provides a cutaway view showing an interior of part of the handheld kitchen appliance shown in FIG. 1;
FIG. 3 provides a perspective view of an actuator, link member, cam assembly and ejector of the handheld kitchen appliance shown in FIGs. 1 and 2; and
FIG. 4 illustrates a geometry of the exemplary link member-cam assembly configuration shown in FIG. 3.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a handheld kitchen appliance comprising a tool coupling configured to releasably engage at least one food processing tool, and a motorized drive system for driving rotation of the at least one engaged food processing tool. The handheld kitchen appliance further includes an ejector for urging release of the at least one food processing tool from the tool coupling, and an actuator that is movable by a user-applied force. A link member has a first coupling portion for coupling to the actuator, and a second coupling portion spaced apart from the first coupling portion. The link member is pivotally mounted between the first and second coupling portions such that the user-applied force causes a pivoting motion of the link member. A cam assembly couples the ejector and the link member to each other at the second coupling portion. The cam assembly is configured to transform the pivoting motion of the link member to a linear motion of the ejector that urges release of the at least one food processing tool from the tool coupling.

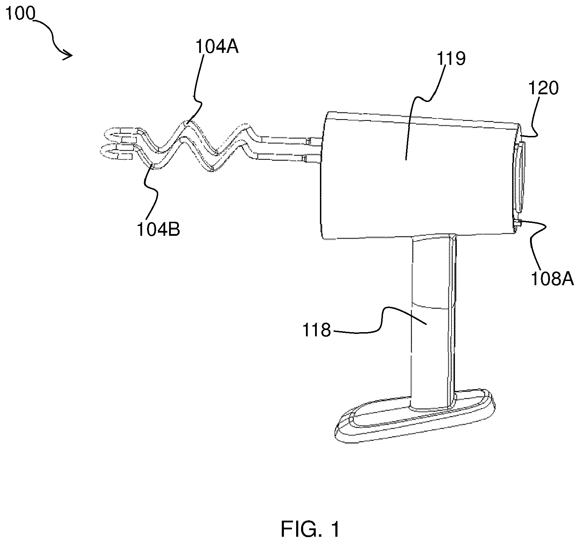

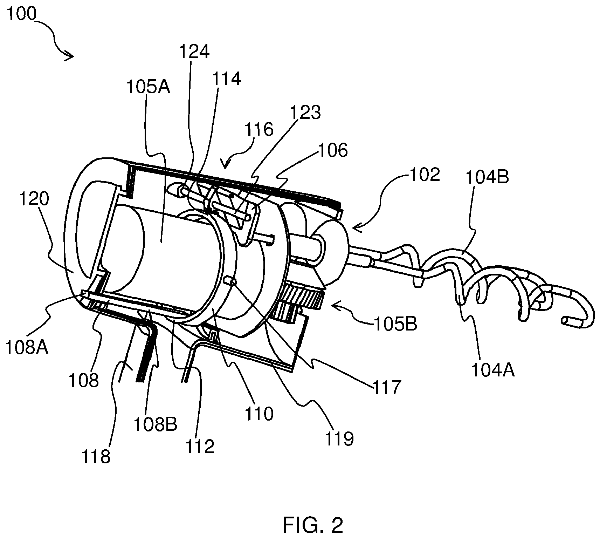

FIG. 1 provides an exterior view of a handheld kitchen appliance 100 according to an example. FIG. 2 provides an interior view of part of the handheld kitchen appliance 100 shown in FIG. 1.

As shown in FIG. 2, the handheld kitchen appliance 100 comprises a tool coupling 102 configured to releasably engage at least one food processing tool 104A, 104B. The handheld kitchen appliance 100 also comprises a motorized drive system 105A, 105B for driving rotation of the food processing tool(s) 104A, 104B when the food processing tool(s) 104A, 104B is or are engaged by the tool coupling 102.

An ejector 106 is provided for urging release of the at least one food processing tool 104A, 104B from the tool coupling 102, e.g. following food processing using the handheld kitchen appliance 100. Such release of the food processing tool(s) 104A, 104B can facilitate cleaning of the food processing tool(s) 104A, 104B and/or can enable one type of food processing tool(s) 104A, 104B to be exchanged for another type in order to implement a different food processing operation.

The tool coupling 102 can have any suitable design. In some embodiments, the tool coupling 102 comprises at least one sleeve, with each of the at least one sleeve being configured to receive and engage a connecting rod of a food processing tool 104A, 104B.

The engagement between the sleeve and the connecting rod may, for example, be implemented via a snap-fit mechanism, which snap-fit mechanism is releasable by the ejector 106 urging, e.g. pushing, the connecting rod out of the sleeve.

In some embodiments, the connecting rod includes one or more protrusions that are receivable in one or more clamping recesses defined in the sleeve in order to engage the connecting rod received in the sleeve.

This engagement can enable the food processing tool(s) 104A, 104B to be rotated by the motorized drive system 105A, 105B because the protrusion(s)-clamping recess(es) arrangement keys the rotation of the motorized drive system 105A, 105B to the food processing tool(s) 104A, 104B.

The engagement between the protrusion(s) and the clamping recess(es) can nonetheless be released by the ejector 106 urging, e.g. pushing, the connecting rod out of the sleeve, and in the process releasing the protrusion(s) from the clamping recess(es).

The ejector 106 can have any suitable design provided that the ejector 106 is capable of urging release of the at least one food processing tool 104A, 104B from the tool coupling 102.

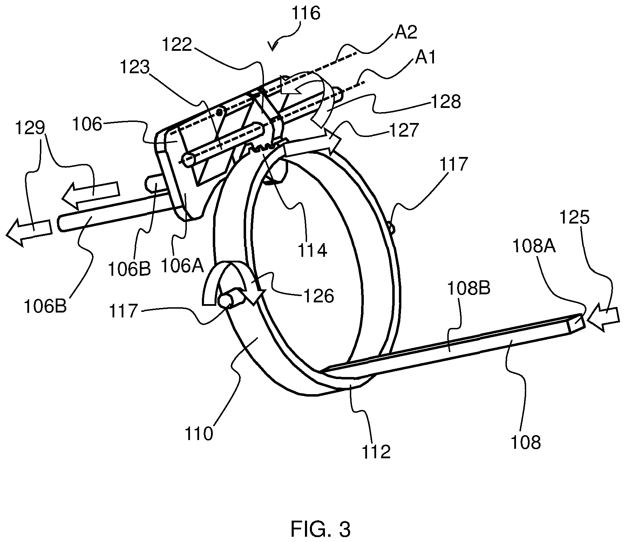

In some embodiments, and as best shown in FIG. 3, the ejector 106 comprises an ejector plate 106A that supports at least one elongate member 106B. The elongate member(s) 106B may be arranged to push against the connecting rod(s), e.g. in order to push the connecting rod(s) out of the above-described sleeve(s) included in the tool coupling 102.

The motorized drive system 105A, 105B preferably comprises a motor 105A and a gear assembly 105B arranged to transfer torque from the motor 105A to the engaged food processing tool(s) 104A, 104B.

In some embodiments, such as that shown in FIGs. 1 and 2, the motor 105A is arranged such that the motor's 105 axis of rotation is aligned or parallel with an ejection axis along which the ejector 106 urges release of the at least one food processing tool 104A, 104B from the tool coupling 102.

Whilst such a design can have advantages over, for instance, a handheld kitchen appliance 100 in which the motor 105A is arranged such that the motor's 105 axis of rotation is perpendicular to the ejection axis, e.g. due to the motor 105A being arranged in the handheld kitchen appliance's handle, it can present ergonomics-related challenges. Such challenges can nonetheless be addressed by the facilitation of ejection of food processing tool(s) 104A, 104B explained herein.

It is noted that the food processing tool(s) 104A, 104B may be included in the handheld kitchen appliance 100. Alternatively, the handheld kitchen appliance 100 may be provided, e.g. supplied, to the user separately from the food processing tool(s) 104A, 104B.

Any suitable type of food processing tool(s) 104A, 104B can be contemplated.

The food processing tool(s) 104A, 104B may, for instance, be beater(s), whisk(s) or dough hook(s).

In some embodiments, such as that shown in FIGs. 1 to 3, the tool coupling 102 is configured to releasably engage two food processing tools 104A, 104B so that both food processing tools 104A, 104B can be rotated at the same time by the motorized drive system 105A, 105B.

In such embodiments, the motorized drive system 105A, 105B may be configured to drive rotation of the food processing tools 104A, 104B in opposite directions relative to each other.

In such embodiments, the gear assembly 105B may be configured to drive rotation of the food processing tools 104A, 104B in opposite directions relative to each other.

Whilst driving rotation of two food processing tools 104A, 104B at the same time can provide effective food processing, e.g. whisking, beating, kneading, etc., other numbers of food processing tools 104A, 104B that can be engaged via the tool coupling 102 in order to be rotated by the motorized drive system 105A, 105B can also be contemplated such as one, three, four, and so on.

The handheld kitchen appliance 100 can be any type of handheld kitchen appliance 100. However, particular mention is made of the handheld kitchen appliance 100 being a food mixer, an example of which is shown in FIGs. 1 and 2, due to the facilitation of ejection of the food processing tool(s) 104A, 104B, e.g. beater(s), whisk(s) or dough hook(s), from the tool coupling 102, explained herein.

Referring to FIGs. 2 and 3, the handheld kitchen appliance 100 comprises an actuator 108 that is movable by a user-applied force. A link member 110 has a first coupling portion 112 for coupling to the actuator 108, and a second coupling portion 114 spaced apart from the first coupling portion 112 for coupling to the ejector 106.

The spacing between the first coupling portion 112 at which the actuator 108 couples, e.g. is attached, to the link member 110 and the second coupling portion 114 can provide flexibility in terms of where in the handheld kitchen appliance 100 the actuator 108 is positioned.

In some embodiments, such as that shown in FIG. 2, the link member 110 extends at least partly around the motorized drive system 105A, 105B. This may assist to make the design of the handheld kitchen appliance 100 more compact.

In some embodiments, the link member 110 extends at least partly around the motor 105A of the motorized drive system 105A, 105B.

For example, the link member 110 comprises a ring that extends around the motorized drive system 105A, 105B, for instance a ring that extends around the motor 105A of the motorized drive system 105A, 105B. An example of the latter is shown in FIG. 2.

As shown in FIG. 2, the link member 110 is pivotally mounted between the first and second coupling portions 112, 114. In this way, the user-applied force to move the actuator 108 causes a pivoting motion of the link member 110.

A cam assembly 116 couples the ejector 106 and the link member 110 to each other at the second coupling portion 114. The cam assembly 116 is configured to transform the pivoting motion of the link member 110 caused by the user's movement, e.g. pushing, of the actuator 108 to a linear motion of the ejector 106 that urges release of the at least one food processing tool 104A, 104B from the tool coupling 102.

The pivotally mounted link member 110 can act like a lever in order to transfer the user's movement of the actuator 108 to the ejector 106 via the cam assembly 116. The cam assembly 116 further facilitates ejection of the food processing tool(s) 104A, 104B by providing flexibility in terms of the direction and/or degree of movement of the actuator 108 that causes the ejector 106 to urge release of the food processing tool(s) 104A, 104B from the tool coupling 102.

This flexibility is demonstrated in FIG. 2 by the actuator 108 in the depicted example not being required to be in line with the tool coupling 102, in other words not being required to be aligned with the ejection axis along which the ejector 106 urges release of the at least one food processing tool 104A, 104B from the tool coupling 102.

In some embodiments, the link member 110 and the cam assembly 116 are configured such that the linear motion of the ejector 106 has a longer travel than the movement of the actuator 108 causing the pivoting motion of the link member 110. In other words, a relatively small actuator 108 stroke results in a larger movement of the ejector 106 to urge release of the food processing tool(s) 104A, 104B. Thus, the link member 110 and the cam assembly 116 can assist to make ejection of the food processing tool(s) 104A, 104B easier for the user to implement via movement of the actuator 108.

Alternatively or additionally, the link member 110 and the cam assembly 116 may be configured such that the actuator 108 is movable by the user-applied force in the same direction as the resultant linear motion of the ejector 106 that urges release of the at least one food processing tool 104A, 104B from the tool coupling 102. The user-applied force being in the same direction as the linear motion of the ejector 106 that urges release of the food processing tool(s) 104A, 104B can assist to make implementing the ejection more intuitive for the user.

In some embodiments, such as that shown in FIGs. 1 to 3, the actuator 108 comprises a button portion 108A contactable by the user and a rod portion 108B extending from the button portion 108A to the first coupling portion 112 of the link member 110.

The user may, for example, push the button portion 108A with a finger or thumb, when applying the force to cause the ejector 106 to urge release of the food processing tool(s) 104A, 104B from the tool coupling 102.

The link member 110 can be pivotally mounted in any suitable manner. In some embodiments, such as that shown in FIG. 2, the link member 110 comprises a pair of lever pins 117 that are each locatable in a lever mounting recess defined in an interior portion of the handheld kitchen appliance's main housing 119 in order to enable the link member 110 to pivot when the user moves the actuator 108.

In such embodiments, the link member 110 may be pivotally mounted at a fixed position in the handheld kitchen appliance 100. Thus, the only permitted movement of the link member 110 is the pivoting caused by the movement of the actuator 108.

It is noted that alternative ways of pivotally mounting the link member 110, e.g. pivotally mounting the link member 110 at a fixed position in the handheld kitchen appliance 100, are conceivable, such as by a pair of mounting recesses being defined in the link member 110, with lever pins protruding from the interior portion of the main housing 119 being locatable in the link member-defined mounting recesses.

In at least some embodiments, the handheld kitchen appliance 100 comprises a handle 118 for permitting a user to grasp the handheld kitchen appliance 100.

In such embodiments, the handle 118 may, irrespective of how the link member 110 is pivotally mounted, extend from the main housing 119.

In some embodiments, the main housing 119 houses the tool coupling 102, the ejector 106, and at least part of the motorized drive system 105A, 105B, e.g. the motor 105A and/or the gear box assembly 105B.

The main housing 119 can, in some embodiments, house the motor 105A.

Arrangement of the motor 105A in the main housing 119, rather than in the handle 118, can mean that the motor's 105A axis of rotation is aligned or parallel with the ejection axis. Whilst this can create a challenge in terms of ergonomic placement of the actuator 108, this can be addressed by the flexibility provided by the above-described link member 110-cam assembly 116 arrangement.

In some embodiments, the first coupling portion 112 is arranged at or proximal to the handle 118, with the second coupling portion 112 being correspondingly arranged distal with respect to the handle 118. An example of this is shown in FIG. 2. This can enable the actuator 108 to be arranged proximal to or at the handle 118, thereby making the food processing tool(s)-ejection functionality of the handheld kitchen device 100 more ergonomic.

In some embodiments, such as that shown in FIGs. 1 and 2, the placement of the actuator 108 is such that the user can move the actuator 108 with the same hand that is grasping the handle 118.

In some embodiments, such as that shown in FIGs. 1 and 2, the handheld kitchen appliance 100 comprises a user-facing exterior surface 120 that faces away from the engaged at least one food processing tool 104A, 104B, with at least a portion of the actuator 108, e.g. the button portion 108A, being arranged at or protruding from the user-facing surface 120 and being pushable, by the user-applied force, towards the engaged at least one food processing tool 104A, 104B.

Such arrangement of the actuator 108 at or protruding from the user-facing surface 120 can facilitate ejection of the food processing tool(s) 104A, 104B whilst also assisting to avoid unintentional ejection, for example while the food processing tool(s) 104A, 104B is or are being rotated by the motorized drive system 105A, 105B.

In some embodiments, such as that shown in FIGs. 1 and 2, the user-facing surface 120 is a surface of the main housing 119. In such embodiments, the portion of the actuator 108, e.g. the button portion 108A, preferably is at or protrudes from an area of the user-facing surface 120 that is adjacent the handle 118 extending from the main housing 119.

This may assist the user to move the actuator 108 with the same hand that is grasping the handle 118, e.g. with a thumb of the hand that is grasping the handle 118.

Alternatively, the user-facing surface 120 may be a surface of the handle 118.

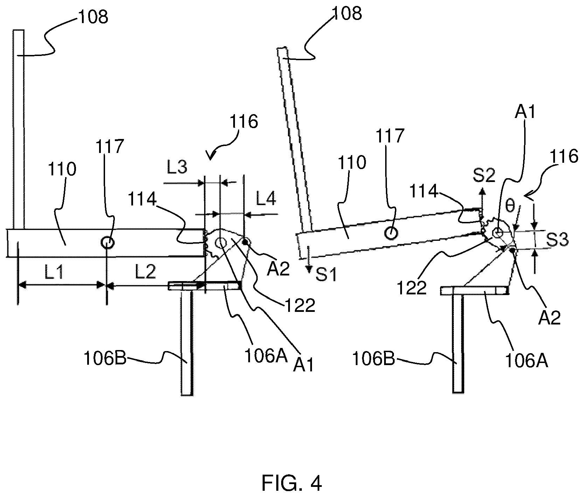

In some embodiments, and as best shown in FIGs. 3 and 4, the cam assembly 116 comprises a cam gear 122 for engaging the second coupling portion 114.

To this end, the second coupling portion 114 may comprise a set of teeth arranged to mesh with a corresponding set of teeth provided on the cam gear 122.

In some embodiments, the cam gear 122 is rotatably mounted at a fixed position in the handheld kitchen appliance 100 to define a first axis of rotation A1, and rotatably coupled to the ejector 106 to define a second axis of rotation A2 extending parallel to the first axis of rotation A1.

The rotatable mounting of the cam gear 122 at a fixed position in the handheld kitchen appliance 100 can be implemented in any suitable manner. In some embodiments, such as that shown in FIGs. 2 and 3, the cam gear 122 is rotatably mounted via a gear pin 123 that locates in a gear pin mounting recess 124 defined in an interior portion of the handheld kitchen appliance's main housing 119.

Operation of the exemplary ejection mechanism is illustrated by the arrows 125, 126, 127, 128 and 129 in FIG. 3. When the user pushes 125 the actuator 108, e.g. the button portion 108A of the actuator 108, the link member 110 pivots 126 via the lever pin 117, resulting in backwards movement 127 of the second coupling portion 114. The cam gear 122 rotates 128 around the gear pin 123 and changes the force direction to push 129 the ejector 106 forwards. The latter urges release of the food processing tool(s) 104A, 104B from the tool coupling 102.

More generally, the direction 129 of the linear motion of the ejector 106 that urges release of the at least one food processing tool 104A, 104B from the tool coupling 102 is preferably parallel to an axis of rotation of the at least one food processing tool 104A, 104B when driven by the motorized drive system 105A, 105B.

Evident in FIG. 3 is that the configuration of the link member 110 and the cam assembly 116 in this example is such that the actuator 108 is movable by the user-applied force in a direction 125 that is the same as a direction 129 of the resultant linear motion of the ejector 106 that urges release of the at least one food processing tool 104A, 104B from the tool coupling 102.

In some embodiments, and referring to FIG. 4, a first distance L3 between the first axis of rotation A1 and an interface between the second coupling portion 114 and the cam gear 122 is shorter than a second distance L4 between the first axis of rotation A1 and the second axis of rotation A2. Making the first distance L3 shorter than the second distance L4 in this manner may facilitate a longer length of travel of the linear motion than the movement of the actuator 108 causing the pivoting motion of the link member 110, in other words a relatively small actuator 108 stroke resulting in a larger movement of the ejector 106 to urge release of the food processing tool(s) 104A, 104B.

Referring to FIG. 4, the following equations can be obtained for describing the ejector's 106 linear motion:

$$S1/S2 = L1/L2$$

$$\theta = S2/L3$$

$$S3 = L4 * Tan(\theta)$$

where

S1 is a forward displacement of the first coupling portion 112 of the link member 110 caused by the movement of the actuator 108;

S2 is a rearward displacement of the second coupling portion 114 of the link member 110 caused by the same movement of the actuator 108;

S3 is a resulting forward displacement of a coupling point at which the cam gear 122 is rotatably coupled to the ejector 106;

L1 is a distance from the first coupling portion 112 to the pivoting point at which the link member 110 is pivotably mounted;

L2 is a distance from the pivoting point at which the link member 110 is pivotably mounted to an interface between the second coupling portion 114 and the cam gear 122;

L3 is the first distance between the first axis of rotation A1 (defined by the rotatable mounting of the cam gear 122) and the interface between the second coupling portion 114 and the cam gear 122; and

L4 is the second distance between the first axis of rotation A1 and the second axis of rotation A2 (defined by the rotatable coupling of the cam gear 122 and the ejector 106).

In some embodiments, the following defines the configuration of the link member 110 and the cam assembly 116:

$$S1/S2 = L1/L2$$

$$S2/L3 = S3/L4$$

$$S3/S1 = (L2 * L4) / (L1 * L3)$$

Setting the pivoting point of the link member 110 midway between the first and second coupling portions 112, 114, and due to the employment of the cam gear 122, with L2*L4 being larger than L1*L3, S3 is significantly larger than S1.

In preferred embodiments, the pivoting point of the link member 110 is set midway between the first and second coupling portions 112, 114, and the link member 110 is supported in the middle of the link member 110, therefore L1=L2 and S1=S2. Then:

$$S3 = L4 * Tan(S1/L3)$$

In such preferred embodiments, due to the employment of the cam gear 122, with L4 being larger than L3, S3 is significantly larger than S1. Thus, a relatively small actuator stroke can lead to a larger movement of the ejector 106 to urge release of the food processing tool(s) 104A, 104B.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

**Claims**

1. A handheld kitchen appliance (100) comprising:

   a tool coupling (102) configured to releasably engage at least one food processing tool (104A, 104B);
   a motorized drive system (105A, 105B) for driving rotation of the at least one engaged food processing tool;
   an ejector (106) for urging release of the at least one food processing tool from the tool coupling;
   an actuator (108) that is movable by a user-applied force;
   a link member (110) having a first coupling portion (112) for coupling to the actuator, and a second coupling portion (114) spaced apart from the first coupling portion, the link member being pivotally mounted between the first and second coupling portions such that said user-applied force causes a pivoting motion of the link member; and

a cam assembly (116) for coupling the ejector and the link member to each other at the second coupling portion, the cam assembly being configured to transform said pivoting motion of the link member to a linear motion of the ejector that urges release of the at least one food processing tool from the tool coupling.

2. The handheld kitchen appliance (100) according to claim 1, wherein the link member (110) and the cam assembly (116) are configured such that the linear motion of the ejector (106) has a longer travel than the movement of the actuator (108) causing the pivoting motion of the link member.

3. The handheld kitchen appliance (100) according to claim 1 or claim 2, wherein the link member (110) and the cam assembly (116) are configured such that the actuator (108) is movable by the user-applied force in the same direction as the resultant linear motion of the ejector (106) that urges release of the at least one food processing tool (104A, 104B) from the tool coupling (102).

4. The handheld kitchen appliance (100) according to any one of claims 1 to 3, comprising a handle (118) for permitting a user to grasp the handheld kitchen appliance, wherein the first coupling portion (112) is arranged at or proximal to the handle.

5. The handheld kitchen appliance (100) according to any one of claims 1 to 4, comprising a user-facing exterior surface (120) that faces away from the engaged at least one food processing tool (104A, 104B), at least a portion of the actuator (108) being arranged at or protruding from said user-facing surface (120) and being pushable, by said user-applied force, towards the engaged at least one food processing tool.

6. The handheld kitchen appliance (100) according to any one of claims 1 to 5, wherein the link member (110) is pivotably mounted midway between the first coupling portion (112) and the second coupling portion (114).

7. The handheld kitchen appliance (100) according to any one of claims 1 to 6, wherein the link member (110) is pivotably mounted at a fixed position in the handheld kitchen appliance.

8. The handheld kitchen appliance (100) according to any one of claims 1 to 7, wherein the cam assembly (116) comprises a cam gear (122) for engaging the second coupling portion (114), the cam gear being rotatably mounted at a fixed position in the handheld kitchen appliance to define a first axis of rotation (A1), and being rotatably coupled to the ejector (106) to define a second axis of rotation (A2) extending parallel to the first axis of rotation.

9. The handheld kitchen appliance (100) according to claim 8, wherein a first distance (L3) between the first axis of rotation (A1) and an interface between the second coupling portion (114) and the cam gear (122) is shorter than a second distance (L4) between the first axis of rotation and the second axis of rotation (A2).

10. The handheld kitchen appliance (100) according to any one of claims 1 to 9, wherein the link member (110) extends at least partly around the motorized drive system (105A, 105B).

11. The handheld kitchen appliance (100) according to any one of claims 1 to 10, wherein the link member (110) comprises a ring that extends around the motorized drive system (105A, 105B).

12. The handheld kitchen appliance (100) according to any one of claims 1 to 11, wherein the direction of said linear motion of the ejector (106) that urges release of the at least one food processing tool (104A, 104B) from the tool coupling is parallel to an axis of rotation of the at least one food processing tool when driven by the motorized drive system (105A, 105B).

13. The handheld kitchen appliance (100) according to any one of claims 1 to 12, wherein the actuator (108) comprises a button portion (108A) contactable by the user and a rod portion (108B) extending from the button portion to the first coupling portion (112) of the link member (110).

14. The handheld kitchen appliance (100) according to any one of claims 1 to 13, comprising the at least one food processing tool (104A, 104B).

15. The handheld kitchen appliance (100) according to any one of claims 1 to 14, wherein the handheld kitchen appliance is a food mixer.

FIG. 1

FIG. 2

FIG. 3

FIG. 4

Europäisches
Patentamt

European
Patent Office

Office européen
des brevets

# EUROPEAN SEARCH REPORT

Application Number

**EP 22 20 0135**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 3 544 234 A (BAUER CHARLES L)<br>1 December 1970 (1970-12-01)<br>* column 1, line 56 – column 2, line 69;<br>claims; figures * | 1-7,<br>10-15<br>8,9 | INV.<br>A47J43/07<br>A47J43/10 |
| A | US 6 234 663 B1 (LECERF JOEL [FR] ET AL)<br>22 May 2001 (2001-05-22)<br>* the whole document * | 1-15 | |
| A | EP 3 323 328 A1 (BSH HAUSGERAETE GMBH<br>[DE]) 23 May 2018 (2018-05-23)<br>* the whole document * | 1-15 | |

TECHNICAL FIELDS
SEARCHED      (IPC)

**A47J**

The present search report has been drawn up for all claims

| Place of search | Date of completion of the search | Examiner |
|---|---|---|
| Munich | 17 August 2023 | Acerbis, Giorgio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 0135

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2023

| Patent document cited in search report | | Publication date | Patent family member(s) | | Publication date |
|---|---|---|---|---|---|
| US 3544234 | A | 01-12-1970 | NONE | | |
| US 6234663 | B1 | 22-05-2001 | BR | 9907198 A | 10-10-2000 |
| | | | CN | 1294503 A | 09-05-2001 |
| | | | DE | 69906932 T2 | 12-02-2004 |
| | | | EP | 1049398 A1 | 08-11-2000 |
| | | | ES | 2196762 T3 | 16-12-2003 |
| | | | FR | 2773978 A1 | 30-07-1999 |
| | | | RU | 2218857 C2 | 20-12-2003 |
| | | | US | 6234663 B1 | 22-05-2001 |
| | | | WO | 9937195 A1 | 29-07-1999 |
| EP 3323328 | A1 | 23-05-2018 | NONE | | |

EPO FORM P0459

For more details about this annex : see Official Journal of the European Patent Office, No. 12/82